# EUROPEAN PATENT APPLICATION

(11) **EP 1 994 835 A1**
(43) Date of publication of application: **26.11.2008**
(21) Application number: 07730338.6
(22) Date of filing: 20.02.2007
(51) Int. Cl.: A23K 1/14, A23K 1/18, B09B 3/00

(54) **USE OF OLIVE EXTRACT AS A PRONUTRIENT IN ANIMAL FEED**

(30) Priority: 22.02.2006 ES 200600536
(71) Applicant: Universidad de Granada, 18071 Granada (ES)
(72) Inventor: GARCIA-GRANADOS LOPEZ DE HIERRO, Andrés, E-18071 Granada (ES); PARRA SANCHEZ, Andrés, E-18071 Granada (ES)
(74) Representative: Pons Arino, Angel
(86) International application number: PCT/ES2007/000097
(87) International publication number: WO 2007/096446

(57) **Abstract**

The invention relates to the use of olive extract as a pronutrient in animal feed, which is obtained exclusively using physical methods. The extract can be used as a natural pronutrient in veterinary science, providing a significant improvement in terms of feed efficiency and other parameters relating to the feeding of birds and pigs. The extract is **characterised in that** it must contain the following majority products: maslinic acid, oleanolic acid, hydroxytyrosol and tyrosol in the free form or in the form of biologically-acceptable salts.

## Description

### OBJECT OF THE INVENTION

A natural pronutrient is proposed which, incorporated in products for animal production, achieves a considerable increase in the efficacy in the conversion index and in some aspects of quality in poultry and pigs (suckling and feeder) of great economic importance.

### STATE OF THE ART

Olive growing has great importance in the temperate countries of almost the entire world. Its main use is olive oil, of which more than one million MT is currently produced in Spain. The classic procedures for olive milling and oil production are called "three-phase", both in continuous and discontinuous form. By these methods, in addition to oil, by-products such as olive water, aqueous fraction of the olive with or without the addition of water, and the pomaces of various types, which are generally extracted for an additional use of oil, are produced. At present, in addition to the three-phase procedures, that called "two-phase" is used wherein, in addition to the oil, a mass is obtained which contains the residue of the pulp and, usually, although not always, the olive pit, mixed with the vegetation water, giving rise to a by-product which is known with the name of "alpeorujo". A patent developed and owned by the University of Granada (P9601652, W098/04331, Method for the industrial use of 3beta-hydroxyolean-12-en-28-oic acid (oleanolic) and (2alpha,3beta)-2,3-dihydroxy-olean-12-en-28-oic acid (maslinic) contained in the olive milling by-products), permits industrially producing these two acids, separately and in a high degree of purity, from solid by-products of industrial olive milling, by any of the methods now used (presses, continuous in three-phases and in the socalled two-phase), which constitutes an attainable and inexhaustible source thereof. The initial part of this patent discloses the production of various olive extracts which have been tested as pronutrients in veterinary science, in the current line tending towards the use of natural products in veterinary science. For a review, see http:/www.racve.es/actividades/zootecnia/borrel_pronutrientes_veterinaria. html.
The current trend at a global level consists of reducing the use of chemical substances with prophylactic character, permitting their use only with therapeutic character, which has made the study of effective alternatives necessary. One of these alternatives consists of the application of these latest advances in nutrition to reinforce and maintain the state of the animal's health, administering nutritional supplements, whose objective is to "provide pronutrients" to be included as ingredients in the feed formulation. The term *"pronutrient"* was defined, for the first time by Dr. Gordon Rosen, in the middle of the 1950s, as a microingredient included in the formulation of food in relatively small quantities with the mission of improving physiology, the intrinsic nutritional value and avoiding the presence of pathogens, classifying them according to their origin and their function into four groups:
- Microbial pronutrients
- Antimicrobial pronutrients
- Food conditioners (flavourings, antioxidants, tampers)
- Prophylactics
This first classification admitted the bacterial, plant and mineral origin of pronutrients.

Since this first definition by Gordon Rosen, the food industry and the legislation has considerably changed, making it necessary to revise the definition, the classification and the origin of the pronutrients, considering it necessary to maintain the definition of Dr. Gordon Rosen and make a revision of the classification and origin of the pronutrients. In this way, a pronutrient would continue to be defined as a microingredient included in the formulation of food in relatively small quantities with the mission of improving the physiology, the intrinsic nutritional value and avoiding the presence of pathogens.

The original classification mixed concepts such as origin and functionality, for which reason it seems more suited to the times to classify the pronutrients according to their function: intestinal conditioners, intestinal optimizers, hepatoprotectors, immunomodulators, mineral absorption promoters, food conditioners (flavourings, enzymes, antioxidants), anti-free radicals, epithelial optimizers, hypophyseal conditioners and ruminal and intestinal prebiotics.

Today, it is accepted that the origin of pronutrients should be restricted to plant and microbiological. This leads us to consider only complex organic molecules or their mixtures as pronutrients, capable of regulating or stimulating the physiology without constituent pharmacological or nutritional effect. Vitamins and chelated minerals could conceptually be considered within this group; their inclusion as additives with a specific group within the European legislation permits considering them as close elements with their own characteristics.

### DESCRIPTION OF THE INVENTION

The production of this concentrated olive extract forms part of patent P9601652, W098/04331, (titled *"Method for the industrial use of 3beta-hydroxyolean-12-en-28-oic acid (oleanolic) and (2alpha,3beta)-2,3-dihydroxy-olean-12-en-28-oic acid (maslinic) contained in the olive milling by-products*")*.* The resulting solid, with a content of fat, terpenes, phenols, polyphenols, glycosides, polyols and sugars contained in the original olive is the olive extract which has been used as natural pronutrient in veterinary science.

An approximate, but not exclusive, standard composition, analysed by proton and carbon 13 one- and two-dimensional NMR techniques indicates that, obtained in suitable conditions, it has fundamentally and mainly these products: maslinic acid, hydroxytyrosol and natural derivatives, oleanolic acid and tyrosol and natural derivatives, together with residues of oil, mannitol, other sugars and natural polyphenols present in the original olive.

This composition depends on the variety of original olive and the batches of industrial waste of the olive milling that are processed, having observed that there may be an approximate deviation of individual composition of around more/less 30%, giving, in general, extracts with between 42% and 80% of maslinic acid, between 8% and 20% of hydroxytyrosol and its natural derivatives, between 7% and 13% of oleanolic acid, and between 2% and 6% of tyrosol and its natural derivatives, being accompanied by at least 8% of very diverse natural minority products originating from the olive (fats, polyols, sugars, other phenols, etc.).

A standard composition of this concentrate would be the following: maslinic acid (65%), hydroxytyrosol and natural derivatives (12%), oleanolic acid (10%), tyrosol and natural derivatives (4%), being accompanied by a maximum of 8% of a multitude of minority products contained in the olive (fats, polyols, sugars, other phenols, etc..).

The animal feed is supplemented with that extract in concentrations between 10 mg and 20 g of pronutrient per Kg of feed, improving the conversion index of the animals thus fed and improving, in some cases, meat quality parameters. No significant variations have been observed in small tests performed with the sodium salts of the pronutrient concentrate.

### EXAMPLES OF RESULTS BY THE APPLICATION OF THE STANDARD PRONUTRIENT

For the experiments performed, the standard extract has been used which contains: Maslinic acid (65%), Hydroxytyrosol and natural derivatives (12%), Oleanolic acid (10%), Tyrosol and natural derivatives (4%), and other minority products contained in the olive.

### 1. For crossed large white pigs

Efficacy experiments have been carried out on two groups of animals in the following conditions.

### Group 1: Control pigs fed with feed without pronutrient

Housing time: 170 days
Initial average weight: 21.50 kg
Final average weight: 122.50 kg
Weight increase: 101.00 kg
Feed consumed: 285 kg
Weight gain/day: 0.59 kg
**CONVERSION INDEX:** (kg of weight gain/kg of feed consumed): 0.35

### Group 2: Control pigs fed with feed with pronutrient (125g/MT)

Housing time: 170 days
Initial average weight: 18.25 kg
Final average weight: 115.00 kg
Weight increase: 96.75 kg
Feed consumed: 240 kg
Weight gain/day: 0.55 kg
**CONVERSION INDEX: (kg of weight gain/kg of feed consumed): 0.40** % of infiltrated fat in the muscle: an approximate increase of 12% is observed in the pigs of group 2 with respect to those of group 1.

### 2. For broilers

### Group 1.-

Weight control without pronutrient between 1 and 21 days
Weight gain/day (average) 39.1 g
Food intake/day (average): 65.8 g
**CONVERSION INDEX** (weight gain/food intake): 0.59

### Group 2.-

Weight control with pronutrient (125 g/MT) between 1 and 21 days
Weight gain/day (average) 39.7 g
Food intake/day (average): 62.6 g
**CONVERSION INDEX** (weight gain/food intake): 0.63

### Group 3.-

Weight control without pronutrient between 22 and 42 days
Weight gain/day (average) 76 g
Food intake/day (average): 54.6 g
**CONVERSION INDEX** (weight gain/food intake): 0.46

### Group 4.-

Weight control with pronutrient (125 g/MT) between 22 and 42 days
Weight gain/day (average) 74.2 g
Food intake/day (average): 47.5 g
**CONVERSION INDEX** (weight gain/food intake): 0.50

**Other details of interest:** The mortality rate in pigs is zero in both groups. The mortality index in broilers is similar in all the experimental groups with a figure of 6%.

Greater quantity of back fat and infiltrated fat are observed in white pigs fed with feed supplemented with pronutrient.

The greatest advantage is observed in all cases as an improvement in the efficacy index per unit of feed consumed in "ad libitum" conditions, which redounds in a saving in expenses corresponding to the food consumed by the animals.

In short, an olive extract is proposed as the invention that has a composition that must contain, as majority components, maslinic acid, oleanolic acid, hydroxytyrosol, tyrosol and their natural derivatives contained in the olive or their biologically acceptable salts. In particular, said extract is effective with more than 45% maslinic acid, more than 8% hydroxytyrosol, more than 7% oleanolic acid, and more than 2% tyrosol and their natural derivatives contained in the olive or their biologically acceptable salts. Specifically, although not exclusively, a greater efficacy has been observed in olive extracts which contain between 42% and 80% of maslinic acid, between 8% and 20% hydroxytyrosol, 7% and 13% oleanolic acid and 2% and 6% tyrosol and up to 3% in other minority products contained in the olive.

This olive extract has been used as pronutrient in animal feed, normally supplementing the feed. By way of non-limitative example, the feed has been supplemented with concentrations of olive extract between 10 mg and 20 g of extract per Kg of feed.
Without being exclusive for these animals, the feed thus supplemented is suitable for the feeding of pigs and poultry.

In its application for pigs, this feed supplemented improves the conversion index in the pig feeding process, as well as the parameters of infiltrated fat in white pig muscle.

On applying it to poultry, it has been detected that it improves the conversion index in the chicken feed process.

## Claims

1. Olive extract **characterized in that** it has a composition which must contain, as majority components, maslinic acid, oleanolic acid, hydroxytyrosol and tyrosol and their natural derivatives contained in the olive or their biologically acceptable salts.

2. Olive extract which contains more than 45% maslinic acid, more than 8% hydroxytyrosol, more than 7% oleanolic acid, and more than 2% tyrosol and their natural derivatives contained in the olive or their biologically acceptable salts.

3. Olive extract which contains between 42% and 80% of maslinic acid, between 8% and 20% hydroxytyrosol, 7% and 13% oleanolic acid and 2% and 6% tyrosol and up to 3% in other minority products contained in the olive.

4. Use of the olive extract according to claims 1 or 2 or 3, as pronutrient in animal feed.

5. Animal feed supplemented with the olive extract according to claims 1 or 2 or 3.

6. Animal feed according to the preceding claim, which contains concentrations of olive extract between 10 mg and 20 g of extract per Kg of feed.

7. Pig feed supplemented with the olive extract in animal production according to claims 1 or 2 or 3.

8. Pig feed according to the preceding claim which contains olive extract concentrations between 10 mg and 20 g of extract per Kg of feed.

9. Feed supplemented with an olive extract according to claim 7, **characterized in that** it has an improvement in the conversion index in the pig feed process.

10. Feed supplemented with an olive extract according to claim 7 or 9, **characterized in that** it has improved parameters of infiltrated fat in the white pig muscle.

11. Chicken feed supplemented with the olive extract in animal production according to claims 1 or 2 or 3.

12. Chicken feed according to the preceding claim which contains olive extract concentrations between 10 mg and 20 g of extract per Kg of feed.

13. Feed supplemented with an olive extract according to claim 11, **characterized in that** it has an improvement in the conversion index in the chicken feed process.

14. Poultry feed supplemented with the olive extract in animal production according to claims 1 or 2 or 3.

15. Poultry feed according to the preceding claim which contains olive extract concentrations between 10 mg and 20 g of extract per Kg of feed.

16. Feed supplemented with an olive extract according to claim 11, **characterized in that** it has an improvement in the conversion index in the poultry feed process.
